# EUROPEAN PATENT APPLICATION

(11) **EP 4 830 946 A1**
(43) Date of publication of application: **28.10.2026**
(21) Application number: 26173652.4
(22) Date of filing: 21.04.2026
(51) Int. Cl.: B60C 11/03, B60C 11/12

(54) **PNEUMATIC TIRE**

(30) Priority: 25.04.2025 JP 2025073734; 25.04.2025 JP 2025073736
(71) Applicant: Toyo Tire Corporation, Itami-shi, Hyogo 664-0847 (JP)
(72) Inventor: MITSUNOBU, Yuki, Itami-shi, Hyogo, 6640847, (JP)
(74) Representative: Müller-Boré & Partner Patentanwälte PartG mbB

(57) **Abstract**

A pneumatic tire (1) has a tread (2) and a designated mounting direction with respect to a vehicle. The tread (2) includes a center main groove (10), V-shaped grooves (20) formed in a plural number along the tire circumferential direction in an area between the center main groove (10) and a ground contact edge (E), and an intermediate rib (7) formed between the center main groove (10) and the V-shaped grooves (20) and extending in the tire circumferential direction. Each V-shaped groove (20) is composed of a longitudinal groove (21) and a lateral groove (22). In the pneumatic tire (1), by having the longitudinal groove (21) joined to a lateral groove (22) of another V-shaped groove (20) located adjacently in the tire circumferential direction, a plurality of the V-shaped grooves (20) are interconnected in the tire circumferential direction.

## Description

### TECHNICAL FIELD

The present invention relates to a pneumatic tire, and more particularly to a pneumatic tire having a designated mounting direction with respect to a vehicle.

### BACKGROUND

Conventionally, there has been widely known a pneumatic tire which has a designated mounting direction with respect to a vehicle, and which has a directional pattern in which grooves are provided with a directional property to enhance drainage effect. For example, JP 2017-121846 A discloses a pneumatic tire which has a directional pattern and is suitable as a racing rain tire for travelling at high speeds on a wet road surface. The tire of JP 2017-121846 A has a plurality of main grooves extending in the tire circumferential direction, and by modifying the shape of a joining portion between a zigzag-shaped middle main groove and a middle lateral groove connected thereto, steering stability is improved while maintaining wet performance.

### SUMMARY

In a high-performance rain tire, it is an important issue to simultaneously achieve, at a high level, sufficient warm-up performance for achieving speedy temperature increase in the tread and sufficient anti-hydroplaning performance for suppressing hydroplaning. Conventional tires including the tire of JP 2017-121846 A have insufficient performance with respect to both of the above performance parameters, and exhibit, for example, poor road contact property and poor steering stability.

A pneumatic tire according to an aspect of the present invention is a pneumatic tire having a tread and a designated mounting direction with respect to a vehicle. The tread includes a center main groove extending in a tire circumferential direction, V-shaped grooves formed in a plural number along the tire circumferential direction in an area between the center main groove and a ground contact edge of the tread, and an intermediate rib formed between the center main groove and the V-shaped grooves and extending in the tire circumferential direction. Each of the V-shaped grooves is composed of a longitudinal groove extending in the tire circumferential direction, and also of a lateral groove, which is more slanted toward a tire axial direction than is the longitudinal groove, and which extends from a first connecting portion constituting a connection with the longitudinal groove and including a vertex of a V shape, to a position beyond the ground contact edge. By having a second connecting portion formed where the longitudinal groove is joined to a lateral groove of another V-shaped groove located adjacently in the tire circumferential direction, a plurality of the V-shaped grooves are interconnected in the tire circumferential direction.

A pneumatic tire according to a further aspect of the present invention is a pneumatic tire having a tread and a designated mounting direction with respect to a vehicle. Assuming that respective regions of the tread obtained by dividing an area extending from an equator to a ground contact edge into three equal parts are sequentially identified from the equator side as a center region, a mediate region, and a shoulder region, the tread includes a circumferential groove formed in the center region and extending in a tire circumferential direction, and a plurality of lateral grooves extending in a tire axial direction at least from the mediate region to a position beyond the ground contact edge. Void ratios of respective ones of the center region and the mediate region are greater than or equal to 1.50 times a void ratio of the shoulder region.

According to a pneumatic tire according to the present invention, excellent warm-up performance and anti-hydroplaning performance can be simultaneously achieved at a high level.

### BRIEF DESCRIPTION OF DRAWINGS

Embodiment(s) of the present invention will be described based on the following figures, wherein:
FIG. 1 is a perspective view of a pneumatic tire according to an example embodiment;
FIG. 2 is a perspective view of the pneumatic tire according to the example embodiment;
FIG. 3 is a plan view of the pneumatic tire according to the example embodiment;
FIG. 4 is an enlarged view of part A in FIG. 3;
FIG. 5 is a perspective view showing a cross section obtained by cutting the tire along line B-B in FIG. 3;
FIG. 6 is an enlarged view of part A in FIG. 3, in which groove shapes are shown in simplified form; and
FIG. 7 is a plan view of tread patterns of pneumatic tires used in comparative examples.

### DESCRIPTION OF EMBODIMENTS

Example embodiments of a pneumatic tire according to the present invention will now be described in detail with reference to the drawings. The embodiments described below are merely examples, and the present invention is not limited to the embodiments below. Further, embodiments obtained by selectively combining constituent elements of the embodiments described below are within the scope of the present invention.

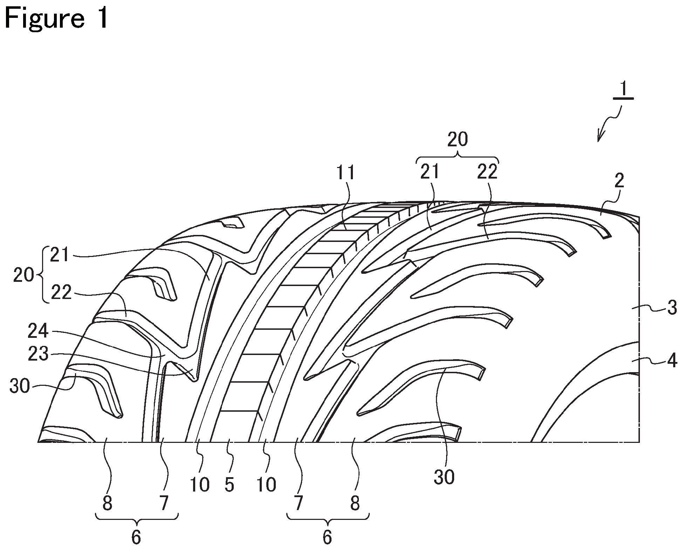

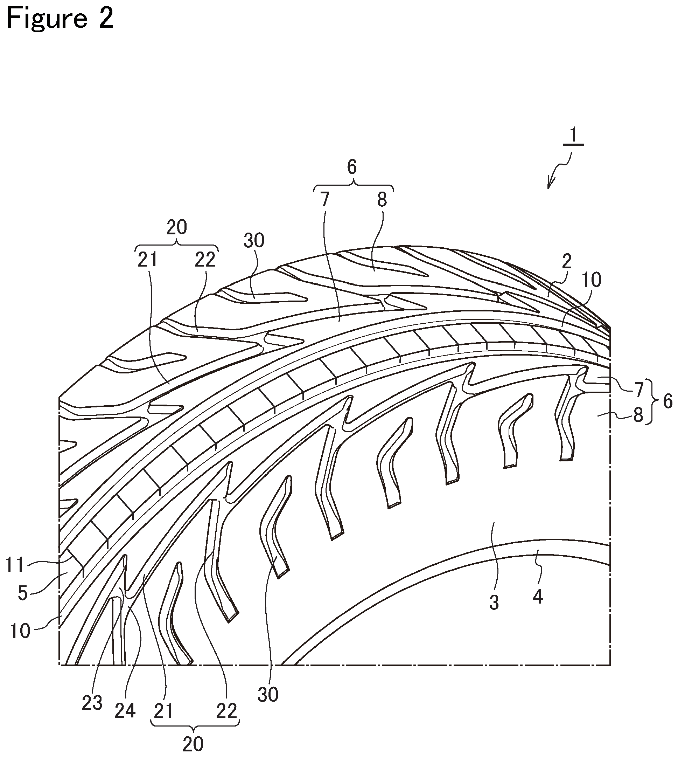

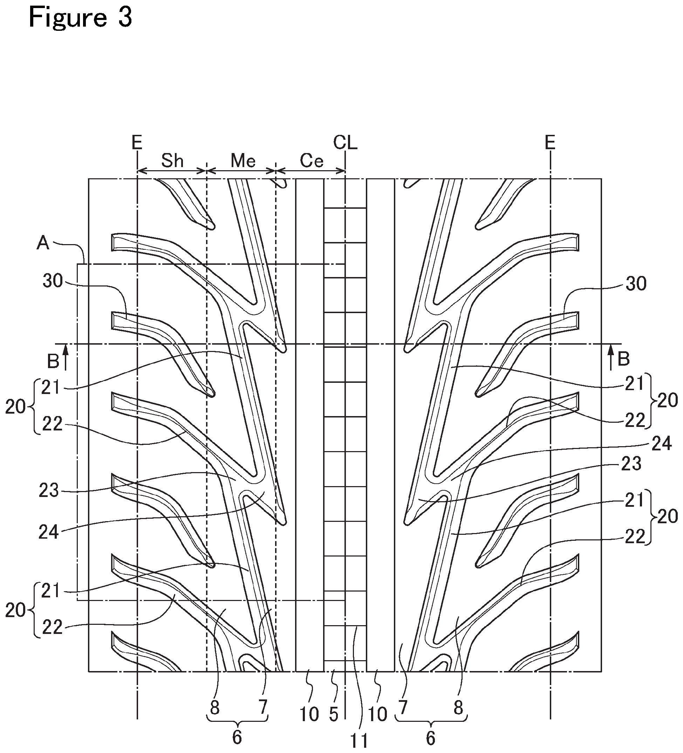

FIGS. 1 and 2 are perspective views of a pneumatic tire 1 according to an example embodiment. FIG. 3 is a plan view of the pneumatic tire 1. As shown in FIGS. 1 to 3, the pneumatic tire 1 comprises a tread 2, which is the part that comes in contact with a road surface. The tread 2 includes a center main groove 10 extending in the tire circumferential direction, and V-shaped grooves 20 formed to have a V-shape in plan view. The center main groove 10 and the V-shaped grooves 20 serve to improve drainage performance and enhance anti-hydroplaning performance in a center region Ce and a mediate region Me of the tread 2, which have significant influence on steering performance of the pneumatic tire 1. As will be described later in detail, the void ratios of respective ones of the center region Ce and the mediate region Me of the tread 2 are greater than or equal to 1.50 times the void ratio of a shoulder region Sh. With this feature, steering stability on a wet road surface is enhanced.

The pneumatic tire 1 is a tire which has a directional pattern including grooves provided with a directional property, and which has a designated mounting direction with respect to a vehicle. The pneumatic tire 1 comprises a tread pattern having bilateral symmetry about the equator CL (i.e., a directional pattern). The equator CL is a virtual line passing through the center in the tire axial direction of the tread 2 and extending along the tire circumferential direction. The pneumatic tire 1 is a high-functionality tire that simultaneously achieves excellent warm-up performance and anti-hydroplaning performance at a high level, and has good road contact property (or conformability) making it possible to achieve excellent steering stability on a wet road surface. The pneumatic tire 1 is, for example, suitable as a wet-weather tire for racing.

The tread 2 comprises two center main grooves 10, and a center rib 5 formed on the equator CL and between the center main grooves 10. The center main grooves 10 are circumferential grooves extending parallel to each other along the tire circumferential direction, and are formed to have identical widths. The center rib 5 is a rib-shaped block partitioned by the two center main grooves 10, and extends in the tire circumferential direction with a uniform width. Preferably, the center main grooves 10 and the center rib 5 are formed continuously in the tire circumferential direction in an annular shape.

The tread 2 comprises outer land parts 6 separated from the center rib 5 by the center main grooves 10. The outer land parts 6 are blocks having a width larger than the center rib 5, and are provided in the tread 2 toward both the left and right sides thereof. The tread 2 has a directional pattern including a first outer land part 6, a first center main groove 10, the center rib 5, a second center main groove 10, and a second outer land part 6, which are arranged in this order from a side toward a first ground contact edge E to a side toward a second ground contact edge E. The first and second outer land parts 6 have identical widths .

In the present specification, a block of the tread 2 means a projecting part that projects outward in the tire radial direction, and in the tire industry, a block may be referred to as a land part. A block formed continuously in the tire circumferential direction in an annular shape is generally referred to as a rib. Further, the ground contact edges E are defined as two edges, in the tire axial direction, of the area (i.e., the ground contact surface) that comes in contact with a flat road surface when an unused pneumatic tire 1 is mounted on a normal rim, filled with air to the normal internal pressure, and while in that state, subjected to a predetermined load. In the case of a passenger car tire, the predetermined load is a load corresponding to 88 % of the normal load.

Here, a "normal rim" is a rim designated by tire standards, and is a "standard rim" according to JATMA, and a "measuring rim" according to TRA and ETRTO. The "normal internal pressure" is the "maximum air pressure" according to JATMA, the maximum value shown in the table "TIRE LOAD LIMITS AT VARIOUS COLD INFLATION PRESSURES" according to TRA, and the "inflation pressure" according to ETRTO. The normal internal pressure is typically 180 kPa for a passenger car tire, but in cases where the tire is labeled "Extra Load" or "Reinforced", the normal internal pressure is 220 kPa. The "normal load" is the "maximum load capacity" according to JATMA, the maximum value shown in the table "TIRE LOAD LIMITS AT VARIOUS COLD INFLATION PRESSURES" according to TRA, and the "load capacity" according to ETRTO.

The pneumatic tire 1 comprises a pair of sidewalls 3 that are convex in the axially outward direction of the tire, and a pair of beads 4. The sidewalls 3 extend in the radially inward direction of the tire from the left and right edges of the tread 2, and constitute the side faces of the pneumatic tire 1. Positions of boundaries between the tread 2 and the sidewalls 3 do not particularly need to be clear, but in the present embodiment, for convenience of explanation, the positions of ends, in the axially outward direction of the tire, of grooves extending in the tire axial direction are identified as the positions of boundaries between the tread 2 and the sidewalls 3. The beads 4 are the parts to be fixed to a rim of a wheel.

The pneumatic tire 1 comprises, for example, a carcass, a belt, and a cap ply. The carcass is a layer of cords covered with rubber, and serves as the skeleton of the tire configured to withstand load, shock, air pressure, and the like. The carcass is composed of two carcass plies, and has a radial structure in which carcass cords are arranged in a direction orthogonal to the tire circumferential direction. On the inner side of the carcass, there is generally provided an inner liner which is a rubber layer for maintaining air pressure. The belt is a reinforcement band arranged between the rubber constituting the tread 2 and the carcass.

Since the pneumatic tire 1 is a tire having a designated mounting direction with respect to a vehicle, or in other words, is a tire having a designated main rotation direction, there may be provided an indicator for showing the main rotation direction. The indicator showing the main rotation direction may be characters, symbols, illustrations, and the like that indicate the main rotation direction, the inward and outward orientation of the tire, and the like, and no particular limitation is imposed on the configuration of the indicator. For example, on the sidewalls 3, there is provided an inscription referred to as a serial code which contains information such as size code, time of production, and place of production, and the serial code may be used as an indicator showing the tire mounting direction with respect to a vehicle.

As described above, the tread 2 comprises two center main grooves 10, a plurality of V-shaped grooves 20, and the blocks (i.e., the center rib 5 and the outer land parts 6) separated by the center main grooves 10. The V-shaped grooves 20 are formed in a plural number along the tire circumferential direction in areas between the center main grooves 10 and the ground contact edges E of the tread 2, or in other words, in the outer land parts 6. The tread 2 further comprises intermediate ribs 7, each formed between a center main groove 10 and V-shaped grooves 20 and extending in the tire circumferential direction. Each intermediate rib 7 is a rib-shaped block partitioned by a center main groove 10 and V-shaped grooves 20, and extends in the tire circumferential direction as with the center rib 5. The intermediate ribs 7 constitute part of the outer land parts 6.

Since the center rib 5 and the intermediate ribs 7 have good conformability to road surfaces, are therefore easily moved, and generate heat speedily, the center rib 5 and the intermediate ribs 7 contribute significantly to improving warm-up performance. As a result, the pneumatic tire 1 provides excellent steering stability even at an initial stage of travel. The tread 2 preferably further comprises a plurality of sipes 11 that are spaced away from each other in the tire circumferential direction and formed traversing the center rib 5. By forming the sipes 11 in the center rib 5, rigidity of the rib is moderately decreased and movement of the rib is further facilitated, so that improvement of warm-up performance is more notably achieved. Each intermediate rib 7 has a changing width along the tire circumferential direction, and has a shape in which portions with a reduced width and portions with an increased width are alternately repeated. Since rigidity is moderately decreased particularly at the portions with a reduced width, the intermediate ribs 7 are readily moved and generate heat easily, as with the center rib 5.

As will be described later in detail, the shape of the intermediate ribs 7 with the changing width is determined by the shape of the V-shaped grooves 20. Each V-shaped groove 20 is composed of a longitudinal groove 21 extending in the tire circumferential direction, and also of a lateral groove 22, which is more slanted toward the tire axial direction than is the longitudinal groove 21, and which extends from a first connecting portion 23 constituting a connection with the longitudinal groove 21 and including the vertex of the V shape, to a position beyond a ground contact edge E. Furthermore, by having a second connecting portion 24 formed where the longitudinal groove 21 is joined to a lateral groove 22 of another V-shaped groove 20 located adjacently in the tire circumferential direction, the V-shaped grooves 20 are interconnected in the tire circumferential direction. With the V-shaped grooves 20 interconnected in the tire circumferential direction, the intermediate ribs 7 are formed to have an annular shape with a changing width along the tire circumferential direction.

The V-shaped grooves 20 interconnected in the tire circumferential direction divide each outer land part 6 into an intermediate rib 7 and shoulder blocks 8. Each shoulder block 8 is partitioned by two V-shaped grooves 20, and the shoulder blocks 8 are provided in a plural number along the tire circumferential direction. The shoulder blocks 8 sequentially arranged in the tire circumferential direction may have identical sizes, or may be arranged in a variable pitch pattern in which the block sizes are varied every predetermined number of blocks. Further, the V-shaped grooves 20 sequentially arranged in the tire circumferential direction may have identical sizes, or may be formed in a variable pitch pattern in which the groove sizes are varied every predetermined number of grooves.

In each of the first and second outer land parts 6, the V-shaped grooves 20 are formed with the vertices of the V-shapes (or the vertices of the V-shaped grooves 20) oriented in the same direction. For example, the V-shaped grooves 20 within each of the first and second outer land parts 6 have identical shapes and sizes. Further, the vertices of two V-shaped grooves 20 formed across from each other on the left and right of the equator CL are aligned in the tire axial direction. The V-shaped grooves 20 formed in the first outer land part 6 and the V-shaped grooves 20 formed in the second outer land part 6 have plan view shapes that are bilaterally symmetrical to each other about the equator CL. That is, when the shape of the V-shaped grooves 20 in one of the outer land parts 6 is flipped about the equator CL, the shape overlaps the shape of the V-shaped grooves 20 in the other outer land part 6.

The tread 2 further comprises second lateral grooves 30 each extending from an area located outward of a ground contact edge E in the tire axial direction into an area between the longitudinal groove 21 and the lateral groove 22 of a V-shaped groove 20, and terminating without connecting to the V-shaped groove 20. The lateral grooves 30 are formed in the shoulder blocks 8 either at uniform intervals or in a variable pitch pattern in the tire circumferential direction. For example, at the ground contact edges E, each lateral groove 30 is formed at a position equidistant from the lateral grooves 22 of two V-shaped grooves located adjacent to each other in the tire circumferential direction. Although the lateral grooves 30 are short-length grooves that are discontinuous in the tire circumferential direction, the lateral grooves 30 complement the drainage function of the center main grooves 10 and the V-shaped grooves 20, and contribute to improving anti-hydroplaning performance. In addition, the lateral grooves 30 moderately decrease rigidity of the shoulder blocks 8, and contribute to improving warm-up performance.

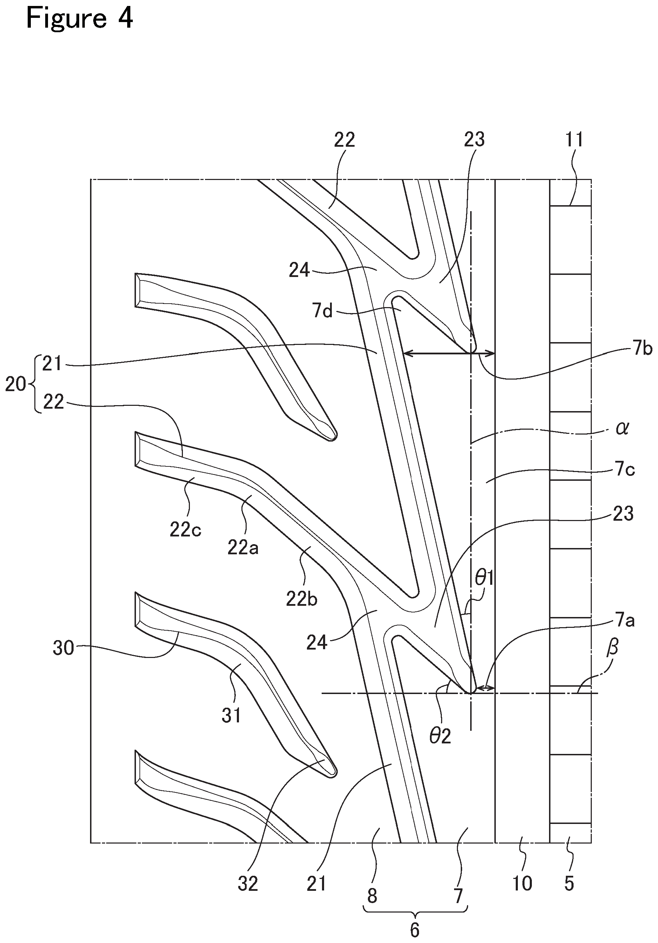

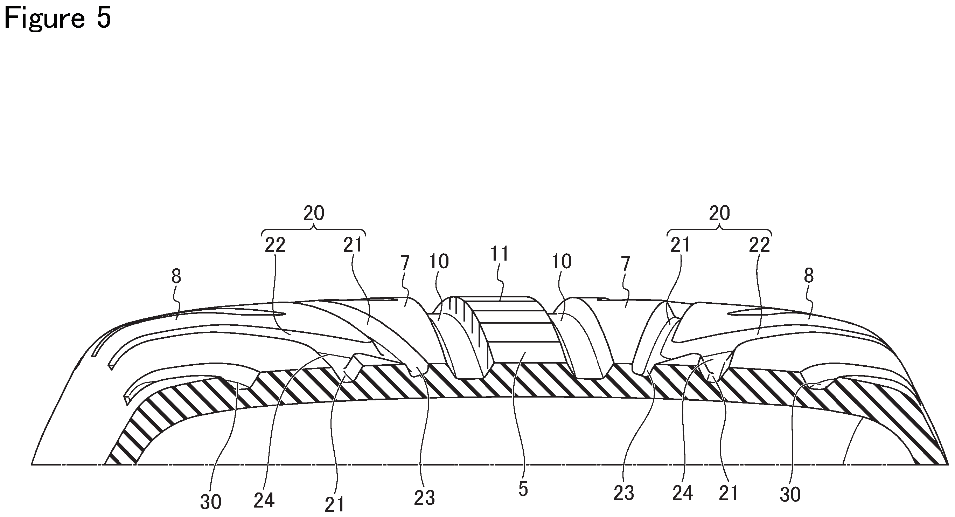

Next, the constituent elements of the tread pattern will be described in detail by further referring to FIGS. 4 and 5. FIG. 4 is an enlarged view of part A in FIG. 3, and FIG. 5 is a perspective view showing a cross section obtained by cutting the tire along line B-B in FIG. 3.

As shown in FIGS. 3 to 5, center regions of the tread 2 have formed therein two center main grooves 10, one center rib 5, and two intermediate ribs 7. In the present specification, respective regions of the tread 2 obtained by dividing an area extending from the equator CL to a ground contact edge E into three equal parts are sequentially identified from the equator CL side as a center region Ce, a mediate region Me, and a shoulder region Sh. The positions of boundaries of the respective regions are shown in FIG. 3. As illustrated in FIG. 3, parts of the intermediate ribs 7 extend into the mediate regions Me, while the portions of the intermediate ribs 7 with a reduced width are located only within the center regions Ce.

By arranging, in the center regions Ce of the tread 2, the center main grooves 10 having a large width, as well as the center rib 5 and the intermediate ribs 7 sandwiching the center main grooves 10, drainage performance is improved while providing a ground contact surface that is continuous in the tire circumferential direction. As a result, good braking performance can be obtained on a wet road surface, and excellent anti-hydroplaning performance can be achieved. Furthermore, since the center rib 5 and the intermediate ribs 7 are more easily moved and generate heat more speedily than the shoulder blocks 8, the center rib 5 and the intermediate ribs 7 serve to improve warm-up performance.

The mediate regions Me of the tread 2 have located therein the connecting portions 23, 24 of the V-shaped grooves, and the groove area in the mediate regions Me is made large as in the center regions Ce. In contrast, the groove area in the shoulder regions Sh is small compared to the groove area in the center regions Ce and in the mediate regions Me. In other words, the shoulder regions Sh have a larger area of ground contact than the center regions Ce and the mediate regions Me. This feature facilitates obtaining high marginal performance during cornering.

As will be described later in detail, the void ratios of respective ones of the center regions Ce and the mediate regions Me are preferably greater than or equal to 45 % and less than or equal to 50 %. Further, the void ratios of the shoulder regions Sh are preferably greater than or equal to 25 % and less than or equal to 35 %. Here, a void ratio means a ratio of the groove area in a region relative to the total area (i.e., the area of ground contact + the groove area) of the region. When the void ratios of the respective regions are within the above-noted ranges, excellent warm-up performance and anti-hydroplaning performance can be simultaneously achieved at an increasingly high level.

### [Center Main Grooves 10]

The center main grooves 10 extend straight along the tire circumferential direction, and are formed in an annular shape with uniform width and depth. Although the two center main grooves 10 may have different widths and depths from each other, from the perspective of improving stability of drainage performance in the left and right tires, the two center main grooves 10 preferably have identical widths and depths. Further, the two center main grooves 10 are formed at positions equidistant from the equator CL. The interval between the two center main grooves 10, which determines the width of the center rib 5, is preferably greater than the width of the center main grooves 10, and in one suitable example, the interval is greater than or equal to 1.3 times and less than or equal to 1.5 times the groove width. In that case, for example, improvement of braking performance on a wet road surface is more notably achieved.

The width of the center main grooves 10 is preferably greater than or equal to 5.0 % and less than or equal to 8.0 %, and more preferably greater than or equal to 5.5 % and less than or equal to 7.0 %, of the ground contact width of the tread 2 (i.e., the distance in the tire axial direction from the first ground contact edge E to the second ground contact edge E). When the width of the center main grooves 10 is within the above-noted range, excellent grip performance and drainage performance can be simultaneously achieved easily. Here, a groove width means a groove width at the opening of the groove, or in other words, a groove width at the plane along the ground contact surface of the tread 2. Each of the grooves, including the center main grooves 10, has groove walls that are sloped such that the groove width tapers from the groove opening toward the groove bottom. The depth of the center main grooves 10 is, for example, greater than or equal to 5.5 mm and less than or equal to 6.5 mm.

### [Center Rib 5]

The center rib 5 is a rib-shaped block extending straight along the tire circumferential direction and formed in an annular shape with a uniform width. The widthwise center of the center rib 5 is preferably located on the equator CL. That is, the center rib 5 has a plan view shape that is bilaterally symmetrical about the equator CL. The width of the center rib 5 is preferably greater than or equal to 8.0 % and less than or equal to 12.0 %, and more preferably greater than or equal to 9.0 % and less than or equal to 10.0 %, of the ground contact width of the tread 2. When the width of the center rib 5 is within the above-noted range, heat generation in the center regions Ce is promoted and excellent warm-up performance can be obtained while ensuring favorable braking performance. The width of the center rib 5 is preferably greater than or equal to 1.3 times and less than or equal to 1.5 times the width of the center main grooves 10.

In the center rib 5, sipes 11 are formed. The tread 2 includes the sipes 11 which are spaced away from each other in the tire circumferential direction and formed traversing the center rib 5. The sipes 11 serve to moderately decrease rigidity of the center rib 5. In other words, the sipes 11 are preferably formed with a size and intervals that moderately decrease rigidity of the center rib 5. In the present specification, a sipe means a groove having the shape of a thin line, or more specifically, a groove having a width of less than 1.5 mm. While the groove openings of the V-shaped grooves 20 and the lateral grooves 30 do not close up even when large load acts on the blocks, the groove openings of the sipes 11 close up at such instances. For this reason, even though the sipes 11 are formed traversing the center rib 5, it can be said that the center rib 5 is an annular block that is continuous in the tire circumferential direction.

Each sipe 11 is formed straight along the tire axial direction and connected to the two center main grooves 10. The sipes 11 are formed either at uniform intervals or in a variable pitch pattern in the tire circumferential direction. Although the intervals of the sipes 11 may be larger than the width of the center rib 5, the intervals are preferably set smaller than the width of the center rib 5. A suitable example of the intervals of the sipes 11 is greater than or equal to 70 % and less than or equal to 95 %, or greater than or equal to 75 % and less than or equal to 90 %, of the width of the center rib 5. The width of the sipes 11 is less than 1.5 mm, and is preferably greater than or equal to 0.5 mm and less than or equal to 1.2 mm. The depth of the sipes 11 is preferably less than the depth of the center main grooves 10, and is, for example, greater than or equal to 50 % and less than or equal to 90 % of the depth of the center main grooves 10. By forming the sipes 11 traversing the center rib 5 to have the above-described intervals and size, movement of the center rib 5 is further facilitated and heat generation is further promoted, so that improvement of warm-up performance is more notably achieved.

### [V-Shaped Grooves 20]

The V-shaped grooves 20 are formed in the outer land parts 6 to each have a V-shape in plan view, which is formed by arranging a longitudinal groove 21 primarily extending in the tire circumferential direction to intersect, at a position near a center main groove 10, with a lateral groove 22 more slanted toward the tire axial direction than is the longitudinal groove 21. The longitudinal groove 21 is connected to a lateral groove 22 of another V-shaped groove 20. With this arrangement, the V-shaped grooves 20 are interconnected in the tire circumferential direction, and the intermediate ribs 7 and the shoulder blocks 8 are formed in the outer land parts 6. Each lateral groove 22 extends from the first connecting portion 23, which is the intersection with its corresponding longitudinal groove 21, to a position beyond a ground contact edge E. The V-shaped grooves 20 serve to improve drainage performance particularly in the mediate regions Me, and contribute significantly to enhancing anti-hydroplaning performance.

It can be described that, in the present embodiment, the lateral grooves 22 located adjacent to each other in the tire circumferential direction are interconnected via the longitudinal grooves 21 which are linking grooves extending in the tire circumferential direction, and the lateral grooves 22 and the linking grooves (i.e., the longitudinal grooves 21) form the grooves having a V-shape in plan view. Since a large cavity (i.e., void) is formed at each first connecting portion 23 located at the vertex of a V-shaped groove 20 and constituting an intersection between a longitudinal groove 21 and a lateral groove 22, a large amount of water on a road surface can be channeled into the first connecting portion 23, and water present between the road surface and the ground contact surface can be effectively removed via the lateral groove 22. Part of the water channeled into the first connecting portion 23 may flow in the tire circumferential direction via the longitudinal groove 21 and then be removed via a lateral groove 22 of another V-shaped groove 20. Furthermore, water on a road surface can also be channeled in a large amount into the second connecting portion 24 constituting the intersection between the longitudinal groove 21 and a lateral groove 22 of another V-shaped groove 20, and this water is removed via the lateral groove 22.

As described above, within each of the left and right outer land parts 6, the V-shaped grooves 20 are formed with the vertices of the V-shaped grooves 20 oriented in the same direction, and are arranged either at uniform intervals or in a variable pitch pattern in the tire circumferential direction. The first connecting portions 23 of the V-shaped grooves 20 are aligned along the tire circumferential direction. At positions near each center main groove 10, the vertices of the V-shaped grooves 20 are arranged on the same straight line (or virtual line α) along the tire circumferential direction. As will be described later in detail, the intermediate ribs 7 have a significantly reduced width in parts located slightly toward the second connecting portions 24 from the vertices of the V-shaped grooves 20, and gradually widen along the longitudinal grooves 21.

Each longitudinal groove 21 is slanted in the tire axial direction so as to be spaced gradually further away from the center main groove 10 along its length toward the next second connecting portion 24. The slant angle θ1 of the longitudinal groove 21 relative to the virtual line α passing through the vertex of the V shape and extending in the tire circumferential direction is preferably greater than or equal to 10 ° and less than or equal to 20 °, and more preferably greater than or equal to 12 ° and less than or equal to 17 °. When the slant angle θ1 of the longitudinal groove 21 is within the above-noted range, for example, excellent drainage performance can be ensured while facilitating movement of the intermediate ribs 7, so that warm-up performance and anti-hydroplaning performance can be simultaneously achieved more effectively.

The structure of the V-shaped grooves 20 will now be described referring to two V-shaped grooves 20 located adjacent to each other in the tire circumferential direction, by identifying one as "the first V-shaped groove 20" and the other as "the second V-shaped groove 20". The longitudinal groove 21 of the first V-shaped groove 20 is connected to the lateral groove 22 of the second V-shaped groove 20 so as to form the second connecting portion 24, and the first and second V-shaped grooves 20 are thereby interconnected in the tire circumferential direction. In the present embodiment, the longitudinal groove 21 of the first V-shaped groove 20 is joined to a part near the first connecting portion 23 of the second V-shaped groove 20. That is, the distance between the first connecting portion 23 and the second connecting portion 24 is less than the distance between the second connecting portion 24 and the ground contact edge E. According to this feature, the second connecting portion 24 having an increased groove area is located at an axially inward part of the tire, and drainage performance is improved.

Between the first connecting portion 23 and the second connecting portion 24, a short segment of the lateral groove 22 is present, and the longitudinal groove 21 of the first V-shaped groove 20 and the longitudinal groove 21 of the second V-shaped groove 20 are not located on the same straight line. In other words, the longitudinal grooves 21 are interconnected via the short segment of the lateral groove 22, and are formed extending along the tire circumferential direction in a zigzag shape. Accordingly, the intermediate rib 7 is formed having indentations and projections on the side toward the V-shaped grooves 20. As will be described later in detail, each intermediate rib 7 includes a plurality of locally narrowest portions 7a having a local minimum width and a plurality of locally widest portions 7b having a local maximum width, which are alternately arranged along the tire circumferential direction.

Each longitudinal groove 21 extends straight from the first connecting portion 23 to the second connecting portion 24, and is formed having uniform width and depth. The width of the longitudinal groove 21 is preferably smaller than the width of the center main grooves 10, and is, in one suitable example, greater than or equal to 50 % and less than or equal to 80 %, or greater than or equal to 60 % and less than or equal to 70 %, of the width of the center main grooves 10. When the width of the longitudinal groove 21 is within the above-noted range, excellent grip performance and drainage performance can be simultaneously ensured easily. The depth of the longitudinal groove 21 may be identical to the depth of the center main grooves 10, or may be greater than or equal to 80 % and less than or equal to 95 % of the depth of the center main grooves 10.

Each lateral groove 22 extends from the first connecting portion 23, which is the intersection with its corresponding longitudinal groove 21, in a direction between the tire circumferential and axial directions. The slant angle 02 of the lateral groove 22 relative to virtual line β passing through the vertex of the V-shaped groove 20 and extending in the tire axial direction is smaller than the slant angle of the lateral groove 22 relative to the virtual line α, and the lateral groove 22 is more slanted toward the tire axial direction than toward the tire circumferential direction. The slant angle θ2 of the lateral groove 22 is preferably greater than or equal to 30 ° and less than or equal to 43 °, and more preferably greater than or equal to 33 ° and less than or equal to 40 °. When the slant angle θ2 of the lateral groove 22 is within the above-noted range, for example, improvement of drainage performance is more notably achieved. Here, the slant angle θ2 means the angle of slant of a first segment 22b of the lateral groove 22.

The lateral groove 22 includes a bent portion 22a, the first segment 22b extending straight from the first connecting portion 23 to the bent portion 22a, and a second segment 22c which extends straight from the bent portion 22a to a position beyond the ground contact edge E and which is more slanted toward the tire axial direction than is the first segment 22b. Although the lateral groove 22 may be gently curved along its entire length, from the perspective of improving drainage and the like, it is preferable that the lateral groove 22 has a first segment 22b and a second segment 22c, that extend linearly, and is locally bent at the position of boundary between the two segments. The slant angle of the second segment 22c relative to the tire axial direction is smaller than the slant angle θ2 of the first segment 22b, and is, for example, greater than or equal to 10 ° and less than or equal to 20 °.

The second connecting portion 24 is formed on the first segment 22b of the lateral groove 22. It can be said that the first segment 22b is the linking groove between the longitudinal groove 21 and the second segment 22c and is also the linking groove between two longitudinal grooves 21. In the present embodiment, the distance between the first connecting portion 23 and the second connecting portion 24 is less than the distance between the second connecting portion 24 and the bent portion 22a. According to this feature, the second connecting portion 24 having a large groove area is located in the mediate region Me of the tread 2, and water can easily be channeled into the lateral groove 22. Further, from the perspective of improving durability of the shoulder block 8 and the like, the bent portion 22a is preferably formed at a position spaced away from the ground contact edge E. On the ground contact edge E, for example, a central part in the length direction of the second segment 22c is located.

The depth of each V-shaped groove 20 at the first connecting portion 23 gradually decreases toward the vertex of the V-shaped groove 20. Since the vertex of the V-shaped groove 20 is located near the center main groove 10 and the intermediate rib 7 is significantly narrowed in the vicinity of the vertex, durability of the intermediate rib 7 can be improved by gradually reducing the depth of the groove toward the vertex. In other words, the first connecting portion 23 of the V-shaped groove 20 is formed to have width and depth that gradually increase with increasing distance from the vertex. With this feature, water channeled into the first connecting portion 23 flows smoothly along the longitudinal groove 21 and the lateral groove 22, and drainage performance is improved.

### [Intermediate Ribs 7]

The intermediate ribs 7 are rib-shaped blocks extending in the tire circumferential direction, and are formed on both the left and right sides of the center rib 5 so as to sandwich the center rib 5 with the center main grooves 10 interposed therebetween. Along the tire circumferential direction, the width of the center rib 5 is uniform, but the width of the intermediate ribs 7 varies. Each intermediate rib 7 has a shape in which locally narrowest portions 7a having a local minimum width and locally widest portions 7b having a local maximum width are alternately repeated along the tire circumferential direction. Each intermediate rib 7 further includes widening portions 7c having a width that gradually increases from a locally narrowest portion 7a to a locally widest portion 7b. Since the two intermediate ribs 7 have plan view shapes that are bilaterally symmetrical to each other about the equator CL, the locally narrowest portions 7a of the two intermediate ribs 7 are aligned in the tire axial direction (the same applies to the locally widest portions 7b and the widening portions 7c).

In the intermediate ribs 7, rigidity of narrow portions such as the locally narrowest portions 7a is decreased, and movement of the intermediate ribs 7 is thereby facilitated. Accordingly, in the intermediate ribs 7, conformability to road surfaces is improved, and heat generation occurs easily. As a result, the intermediate ribs 7 contribute significantly to improving warm-up performance. At the same time, the intermediate ribs 7 have a width of greater than or equal to 5.5 mm at the locally narrowest portions 7a, and the depth of the V-shaped grooves 20 gradually decreases toward the vertex, or in other words, toward the locally narrowest portions 7a. For these reasons, warm-up performance can be improved while ensuring durability of the intermediate ribs 7, excellent braking performance, and the like.

The changes in the width of the intermediate ribs 7 are due to the shape of the V-shaped grooves 20. Accordingly, while the edges of the intermediate ribs 7 along the center main grooves 10 extend straight in the tire circumferential direction, the edges of the intermediate ribs 7 along the V-shaped grooves 20 are slanted toward the tire axial direction and formed in a zigzag shape. In the present specification, the width of each intermediate rib 7 means the distance along the tire axial direction from the edge along the center main groove 10 to an edge of a V-shaped groove 20 located closest to the center main groove 10. Here, although the intermediate ribs 7 include triangular portions 7d having a substantially triangular shape in plan view, each of which is located between the longitudinal groove 21 of a first V-shaped groove 20 and the lateral groove 22 of a second V-shaped groove 20, the triangular portions 7d are regarded as not constituting the width of the intermediate ribs 7.

Each intermediate rib 7 includes locally narrowest portions 7a, widening portions 7c, and locally widest portions 7b sequentially arranged in the tire circumferential direction, and has a plan view shape in which large indentations and projections are formed on its edge along the V-shaped grooves 20. In the present embodiment, a portion adjacent in the tire axial direction to a portion of a V-shaped groove 20 having a groove depth gradually decreasing toward the vertex corresponds to a locally narrowest portion 7a, and a portion adjacent in the tire circumferential direction to the triangular portion 7d corresponds to a locally widest portion 7b. From the most indented part where the locally narrowest portion 7a is formed, the edge of the intermediate rib 7 along the V-shaped groove 20 projects outward in the tire axial direction progressively toward the triangular portion 7d. The width of the intermediate ribs 7 at the locally narrowest portions 7a is preferably greater than or equal to 10 % and less than or equal to 30 %, and more preferably greater than or equal to 15 % and less than or equal to 25 %, of the width of the intermediate ribs 7 at the locally widest portions 7b. In that case, it becomes easy to improve warm-up performance while ensuring excellent braking performance and durability of the intermediate ribs 7.

### [Second Lateral Grooves 30]

In each shoulder block 8, the second lateral grooves 30 are formed, with each one being located between two first lateral grooves 22. The lateral grooves 22 and 30 are alternately arranged in the tire circumferential direction, and, for example, extend from the mediate region Me of the tread 2 across the shoulder region Sh to a position beyond the ground contact edge E. Although the lateral grooves 30 are short grooves that are not connected to the V-shaped grooves 20, the lateral grooves 30 serve to improve drainage performance, and also moderately decrease rigidity of the shoulder block 8 to thereby contribute to enhancing warm-up performance.

Each lateral groove 30 has a bent portion 31, as with the lateral grooves 22. In the lateral groove 30, the segment located outward in the tire axial direction from the bent portion 31 is more slanted toward the tire axial direction than is the segment located inward in the tire axial direction from the bent portion 31. The bent portion 31 is, for example, formed in a central part in the length direction of the lateral groove 30. In the lateral groove 30, its end portion located toward the center main groove 10 (or inward in the tire axial direction) and inserted between the longitudinal groove 21 and the lateral groove 22 of a V-shaped groove 20 is formed in a tapered shape in plan view, with the groove depth gradually decreasing toward the tip. With this feature, water can be more smoothly drained outward in the tire axial direction.

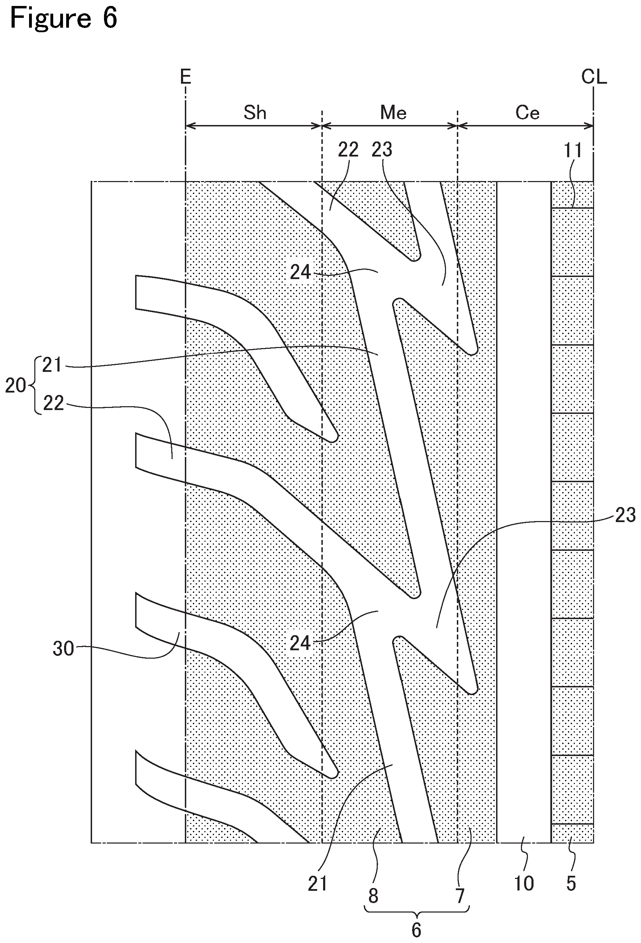

Next, void ratios of the respective regions of the tread 2 will be described in detail by reference to FIG. 6. FIG. 6 is an enlarged view of part A in FIG. 3, in which groove shapes are shown in simplified form.

As with FIG. 3, FIG. 6 shows the positions of boundaries of a center region Ce, a mediate region Me, and a shoulder region Sh of the tread 2. As described above, these regions of the tread 2 are regions obtained by dividing an area of the tread 2 extending from the equator CL to a ground contact edge E into three equal parts, and are sequentially identified from the equator CL side as the center region Ce, the mediate region Me, and the shoulder region Sh. A void ratio of a region means a ratio of area of grooves formed in the region relative to the total area of the region. Here, sipes are regarded as grooves, and all parts other than ground contact surface parts that come in contact with a road surface are identified as void. The parts depicted with a dot hatch pattern in FIG. 6 correspond to ground contact surface parts, while the parts without the dot hatch pattern correspond to grooves (i.e., void).

As shown in FIG. 6, in the tread 2, the void ratios of the center region Ce and the mediate region Me are significantly higher than the void ratio of the shoulder region Sh. In other words, the ground contact area in the shoulder region Sh is significantly larger than the ground contact areas in the center region Ce and the mediate region Me. By forming the shoulder region Sh to have a low void ratio and a large ground contact area and, at the same time, forming the center region Ce and the mediate region Me to have a high void ratio, drainage performance is improved while maintaining marginal performance during cornering, and block heat generation is also promoted. As a result, warm-up performance and anti-hydroplaning performance are enhanced, and improvement of steering stability on a wet road surface is notably achieved.

More specifically, the void ratios of respective ones of the center region Ce and the mediate region Me are greater than or equal to 1.50 times the void ratio of the shoulder region Sh, and are more preferably greater than or equal to 1.50 times and less than or equal to 1.80 times, or greater than or equal to 1.50 times and less than or equal to 1.70 times, or greater than or equal to 1.55 times and less than or equal to 1.65 times the void ratio of the shoulder region Sh. With this feature, warm-up performance and anti-hydroplaning performance are significantly improved compared to when the above-noted relationship of the void ratios is not satisfied.

The void ratios of respective ones of the center region Ce and the mediate region Me are preferably greater than or equal to 45 % and less than or equal to 50 %, and more preferably greater than or equal to 46 % and less than or equal to 49 %. In that case, greater improvement of warm-up performance and anti-hydroplaning performance is obtained compared to when the void ratios of the center region Ce and the mediate region Me do not fall within the above-noted range. In the center region Ce, a center main groove 10 is formed, and in the mediate region Me, the connecting portions 23, 24 of V-shaped grooves 20 are formed. For these reasons, the void ratios of the center region Ce and the mediate region Me are high, and anti-hydroplaning performance is improved. Furthermore, due to the high void ratios, block rigidity is moderately decreased and block heat generation is promoted, so that warm-up performance is improved.

The difference between the void ratio of the center region Ce and the void ratio of the mediate region Me is preferably less than or equal to 1.5 %. While the void ratio of the center region Ce may be either higher or lower than the void ratio of the mediate region Me, the difference between the two void ratios is preferably small. In that case, greater improvement in warm-up performance and anti-hydroplaning performance is obtained compared to when the above-noted relationship of the void ratios is not satisfied. In the tread pattern shown in FIG. 6, when the sipes 11 are present in the center rib 5, the inequality (void ratio of center region Ce) > (void ratio of mediate region Me) holds true, and when the sipes 11 are not formed, the inequality (void ratio of center region Ce) < (void ratio of mediate region Me) holds true.

The void ratio of the shoulder region Sh is preferably greater than or equal to 25 % and less than or equal to 35 %, and more preferably greater than or equal to 27 % and less than or equal to 33 %, or greater than or equal to 28 % and less than or equal to 31 %. In that case, compared to when the void ratio of the shoulder region Sh does not fall within the above-noted range, grip performance on a wet road surface is improved while ensuring excellent warm-up performance and anti-hydroplaning performance, and favorable cornering characteristics can be achieved. Even with such a low void ratio, the functions of the V-shaped grooves 20 and the lateral grooves 30 ensure favorable drainage performance and promote block heat generation.

As explained above, according to the pneumatic tire 1 having the above-described configuration, excellent warm-up performance and anti-hydroplaning performance can be simultaneously achieved at a high level. In particular, since the center rib 5 and the intermediate ribs 7 have good conformability to road surfaces, are thus easily moved, and generate heat speedily, the center rib 5 and the intermediate ribs 7 contribute significantly to enhancing warm-up performance and make it possible to achieve excellent steering stability even at an initial stage of travel. Further, the center main grooves 10 and the V-shaped grooves 20 improve drainage performance and contribute significantly to enhancing anti-hydroplaning performance. Furthermore, by setting the void ratios of respective ones of the center region Ce and the mediate region Me to be greater than or equal to 1.50 times the void ratio of the shoulder region Sh, drainage performance is improved while maintaining marginal performance during cornering, and block heat generation is also promoted. As a result, improvement of steering stability on a wet road surface at an initial stage of travel is notably achieved.

In the above embodiment, since the center rib 5 and the intermediate ribs 7 have good conformability to road surfaces, are thus easily moved, and generate heat speedily, the center rib 5 and the intermediate ribs 7 contribute significantly to enhancing warm-up performance and make it possible to achieve excellent steering stability even at an initial stage of travel. Further, the center main grooves 10 and the V-shaped grooves 20 improve drainage performance and contribute significantly to enhancing anti-hydroplaning performance.

It is noted that the above embodiment can be modified in design as appropriate so long as the objects of the present invention are not impaired. For example, although the sipes 11 are formed in the center rib 5 in the present embodiment, the sipes 11 may be not formed in the center rib 5. Further, a configuration in which a center main groove is formed on the equator CL and the center rib 5 is not formed may be possible. However, by forming the center rib 5 on the equator CL, it becomes easy to simultaneously achieve excellent grip performance and drainage performance. Furthermore, the center rib 5 promotes heat generation in the center regions Ce. Particularly when the sipes 11 are formed, rigidity of the center rib 5 is moderately decreased, and movement of the rib is facilitated. As a result, heat generation is further promoted, and improvement of warm-up performance is more notably achieved.

### EXAMPLES

While the present invention is further described below by reference to an Example, the present invention is not limited to the Example.

### <Example 1>

Tires T1 (tire size: 305/680R18) having the tread pattern shown in FIGS. 1 to 6 were mounted on the four front and rear wheels of an actual vehicle. A racing circuit run was performed in rainy weather to evaluate temperature increase at the ground contact surface of the tread (or the tread surface), as well as lap time. The evaluation results are shown in Table 1 together with the void ratios of the center regions Ce, the mediate regions Me, and the shoulder regions Sh. The temperature increase ratio shown in Table 1 is a value relative to the temperature increase value of tires R2 of below-described Comparative Example 2, where the temperature increase value is assumed to be 100. The lap time ratios are values relative to the respective lap times of a vehicle mounted with tires R1 of below-described Comparative Example 1 and a vehicle mounted with the tires R2 of Comparative Example 2, where the respective lap times are assumed to be 100. In addition, anti-hydroplaning performance was evaluated by the method described further below.

The main specifications of the tires T1 were as below.
Void ratio of center regions Ce: 48.4 %
Void ratio of mediate regions Me: 47.3 %
Void ratio of shoulder regions Sh: 30.1 %
Width of center main grooves: 17 mm
Width of V-shaped grooves: 11 mm
Width of center rib: 26 mm
Sipe width and intervals: 1.0 mm, 20 mm

### [Evaluation of Anti-Hydroplaning Performance]

On a road surface with a water depth set to 8 mm, the vehicle was accelerated from 0 km/h (in straight travel), and the velocity at which hydroplaning occurred was evaluated. The evaluation results shown in Table 1 are values relative to the value for the tires R1 of Comparative Example 1, which is assumed to be 100, and a higher value indicates superior anti-hydroplaning performance.

### <Comparative Example 1>

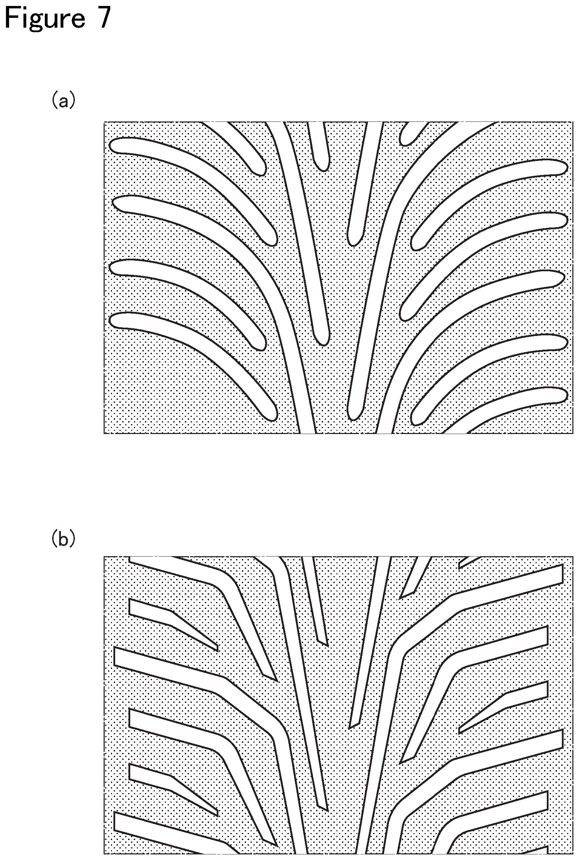

Tires R1 having the tread pattern shown in FIG. 7(a) (see Table 1 for the void ratios of the respective regions of the tread) were mounted on the four front and rear wheels of an actual vehicle, and performance evaluation was carried out.

### <Comparative Example 2>

Tires R2 having the tread pattern shown in FIG. 7(b) (see Table 1 for the void ratios of the respective regions of the tread) were mounted on the four front and rear wheels of an actual vehicle, and performance evaluation was carried out.

**[Table 1]**

| | Void ratios Ce/Me/Sh (%) | Pattern | Front tire temperature (°C) (Ce/Me/Sh) | | | Rear tire temperature (°C) (CeMe/Sh) | | | Tire temperature (°C) | Tire temperature before travel (°C) | Tread surface temperature increase (°C) | Tread surface temperature increase ratio (%) | Lap time | Lap time (%) | Lap time (%) | Anti-hydroplaning performance |
|---|---|---|---|---|---|---|---|---|---|---|---|---|---|---|---|---|
| Comparative Example 1 | 35.4/40.3/31.8 | FIG. 7(a) | - | - | - | - | - | - | - | - | - | - | 1'20"35 | 100 | - | 100 |
| Comparative Example 2 | 35.5/36.0/37.4 | FIG. 7(b) | 28 | 32 | 37 | 25 | 30 | 32 | 30.4 | 17.2 | 13.2 | 100 | 1'19"68 | - | 100 | 97.8 |
| Example 1 | 48.4/47.3/30.1 | FIG. 3 | 28 | 36 | 37 | 28 | 32 | 36 | 32.2 | 17.2 | 15 | 114 | 1'13"71 | 91.7 | 92.5 | 107.1 |

Compared to the tires R2 of Comparative Example 2, the tires T1 of Example 1 had a higher ratio of temperature increase at the tread surface as shown in Table 1, and it is understood that superior warm-up performance was achieved. Further, compared to the tires R1 and R2 of Comparative Examples 1 and 2, the tires T1 of Example 1 had superior anti-hydroplaning performance. The superior performances of the tires T1 were notably reflected in the lap time. The lap time obtained when the tires T1 were mounted was significantly reduced compared to the lap times obtained when the tires R1, R2 were mounted, and it is understood that the tires T1 had excellent steering stability on a wet road surface.

### REFERENCE SIGNS LIST

1 pneumatic tire; 2 tread; 3 sidewall; 4 bead; 5 center rib; 6 outer land part; 7 intermediate rib; 7a locally narrowest portion; 7b locally widest portion; 7c widening portion; 8 shoulder block; 10 center main groove; 11 sipe; 20 V-shaped groove; 21 longitudinal groove; 22 lateral groove; 22a bent portion; 22b first segment; 22c second segment; 23 first connecting portion; 24 second connecting portion; 30 second lateral groove; 31 bent portion; 32 tapered portion; CL equator; E ground contact edge; Ce center region; Me mediate region; Sh shoulder region.

## Claims

1. A pneumatic tire (1) having a tread (2) and a designated mounting direction with respect to a vehicle, wherein
the tread (2) comprises:
a center main groove (10) extending in a tire circumferential direction;
V-shaped grooves (20) formed in a plural number along the tire circumferential direction in an area between the center main groove (10) and a ground contact edge (E) of the tread (2); and
an intermediate rib (7) formed between the center main groove (10) and the V-shaped grooves (20) and extending in the tire circumferential direction, wherein
each of the V-shaped grooves (20) is composed of a longitudinal groove (21) extending in the tire circumferential direction, and also of a lateral groove (22), which is more slanted toward a tire axial direction than is the longitudinal groove (21), and which extends from a first connecting portion (23) constituting a connection with the longitudinal groove (21) and including a vertex of a V-shape, to a position beyond the ground contact edge (E), and
by having a second connecting portion (24) formed where the longitudinal groove (21) is joined to a lateral groove (22) of another V-shaped groove (20) located adjacently in the tire circumferential direction, a plurality of the V-shaped grooves (20) are interconnected in the tire circumferential direction.

2. The pneumatic tire (1) according to claim 1, wherein
the first connecting portions (23) of the V-shaped grooves (20) are aligned along the tire circumferential direction, and
each of the longitudinal grooves (21) is slanted toward the tire axial direction so as to be spaced away from the center main groove (10) gradually along its length toward the second connecting portion (24).

3. The pneumatic tire (1) according to claim 2, wherein a distance between the first connecting portion (23) and the second connecting portion (24) is less than a distance between the second connecting portion (24) and the ground contact edge (E).

4. The pneumatic tire (1) according to any one of claims 1 to 3, wherein a depth of each of the V-shaped grooves (20) at the first connecting portion (23) gradually decreases toward the vertex of the V shape.

5. The pneumatic tire (1) according to any one of claims 1 to 4, wherein the intermediate rib (7) has a shape in which locally narrowest portions (7a) with a reduced width and locally widest portions (7b) with an increased width are alternately repeated along the tire circumferential direction.

6. The pneumatic tire according to any one of claims 1 to 5, wherein the lateral groove (22) includes a bent portion (22a), a first segment (22b) extending straight from the first connecting portion (23) to the bent portion (22a), and a second segment (22c) which extends straight from the bent portion (22a) to a position beyond the ground contact edge (E) and which is more slanted toward the tire axial direction than is the first segment (22b).

7. The pneumatic tire (1) according to claim 6, wherein
the second connecting portion (24) is formed on the first segment (22b) of the lateral groove (22), and
a distance between the first connecting portion (23) and the second connecting portion (24) is less than a distance between the second connecting portion (24) and the bent portion (22a).

8. The pneumatic tire (1) according to any one of claims 1 to 7, wherein the tread (2) comprises a second lateral groove (30) extending from an area located outward, in the tire axial direction, of the ground contact edge (E) into an area between the longitudinal groove (21) and the lateral groove (22) of one of the V-shaped grooves (20), and terminating without connecting to the V-shaped groove (20).

9. The pneumatic tire (1) according to claim 8, wherein, in the second lateral groove (30), its end portion located toward the center main groove (10) is formed in a tapered shape in plan view, with a groove depth gradually decreasing toward a tip thereof.

10. The pneumatic tire (1) according to any one of claims 1 to 9, wherein the tread (2) comprises:
two center main grooves (10), each being said center main groove; and
a center rib (5) formed on an equator (CL) and between the center main grooves (10).

11. The pneumatic tire (1) according to claim 10, wherein the tread (2) comprises a plurality of sipes (11) spaced away from each other in the tire circumferential direction and formed traversing the center rib (5).

12. The pneumatic tire (1) according to any one of claims 1 to 11, wherein
respective regions of the tread (2) obtained by dividing an area extending from an equator (CL) to a ground contact edge (E) into three equal parts are sequentially identified from the equator (CL) side as a center region (Ce), a mediate region (Me), and a shoulder region (Sh), void ratios of respective ones of the center region (Ce) and the mediate region (Me) are greater than or equal to 1.50 times a void ratio of the shoulder region (Sh).

13. The pneumatic tire (1) according to claim 12, wherein the void ratios of respective ones of the center region (Ce) and the mediate region (Me) are greater than or equal to 45 % and less than or equal to 50 %.

14. The pneumatic tire (1) according to claim 12 or 13, wherein a difference between the void ratio of the center region (Ce) and the void ratio of the mediate region (Me) is less than or equal to 1.5 %.

15. The pneumatic tire (1) according to any one of claims 12 to 14, wherein the void ratio of the shoulder region (Sh) is greater than or equal to 25 % and less than or equal to 35 %.
